# EUROPÄISCHE PATENTSCHRIFT

(11) **EP 2 635 627 B1**
(45) Veröffentlichungstag und Bekanntmachung des Hinweises auf die Patenterteilung: **24.09.2014**
(21) Anmeldenummer: 11776800.2
(22) Anmeldetag: 02.11.2011
(51) Int. Cl.: C08J 9/00, C08K 7/20, C09K 21/02, C09K 21/14, C08G 12/32

(54) **MELAMINHARZSCHAUMSTOFF MIT ANORGANISCHEM FÜLLMATERIAL**
MELAMINE RESIN FOAM MATERIAL HAVING AN INORGANIC FILLER
MOUSSE DE RÉSINE MÉLAMINE COMPRENANT UNE MATIÈRE DE REMPLISSAGE INORGANIQUE

(30) Priorität: 05.11.2010 EP 10190085
(43) Veröffentlichungstag der Anmeldung: 11.09.2013
(73) Patentinhaber: BASF SE, 67056 Ludwigshafen (DE)
(72) Erfinder: STEINKE, Tobias, Heinz, 67346 Speyer (DE); ULANOVA, Tatiana, 67063 Ludwigshafen (DE); HAHN, Klaus, 67281 Kirchheim (DE); BAUMGARTL, Horst, 67063 Ludwigshafen (DE); MÖCK, Christof, 68259 Mannheim (DE); VATH, Bernhard, 68259 Mannheim (DE); NESSEL, Peter, 67067 Ludwigshafen (DE); SCHIERHOLZ, Jens-Uwe, 64625 Bensheim (DE); WESTER, Bettina, 67133 Maxdorf (DE); QUADBECK-SEEGER, Hans-Jürgen, 67098 Bad Dürkheim (DE)
(86) Internationale Anmeldenummer: PCT/EP2011/069199
(87) Internationale Veröffentlichungsnummer: WO 2012/059493

(56) Entgegenhaltungen:
- EP-B1- 1 519 972
- DE-A1-102007 009 127

## Beschreibung

Die vorliegende Erfindung betrifft Melaminharzschaumstoffe, Verfahren zu deren Herstellung sowie deren Verwendung.

Aus der EP-A-1 146 070 ist die Imprägnierung mit einem Ammoniumsalz und aus der WO-A-2007/23118 die Imprägnierung mit Natriumsilikat zur Verbesserung der Brandeigenschaften von Melamin-Formaldehyd-Schaumstoffen bekannt. Diese lassen jedoch in ihren mechanischen Eigenschaften noch zu wünschen übrig.

Aus der DE-A-10 2007 009127 sind faserverstärkte Schaumstoffe auf Basis von Melamin-/Formaldehyd-Harzen mit einem Faseranteil von 0,5 bis 50 Gew.-% bekannt. Als faserförmiger Füllstoff werden Kurz- oder Langfasern aus Glas, Kohlenstoff oder Melaminharz eingesetzt.

Aus der WO-A-2009/021963 ist ein Verfahren zur Herstellung eines abrasiven Schaumstoffs auf Basis eines Melamin-Formaldehyd-Kondensationsproduktes bekannt, welches 0,01 bis 50 Gew.-% anorganische Nanopartikel bezogen auf das Gewicht des Vorkondensats enthält.

Der vorliegenden Erfindung lag daher die Aufgabe zugrunde, den zuvor genannten Nachteilen abzuhelfen, insbesondere Melaminharzschaumstoffe mit verbesserten Brandeigenschaften bei gleichzeitig guten mechanischen Eigenschaften bereit zu stellen.

Demgemäß wurden neue Melamin-/Formaldehyd-Schaumstoffe gefunden, die 80 bis 98 Gew.-% eines anorganischen Füllmaterials enthalten, wobei die Gew.-% auf das Gesamtgewicht aus zur Schaumstoffherstellung eingesetztem Melamin-/Formaldehyd-Vorkondensat und anorganischem Füllmaterial bezogen sind.
Die erfindungsgemäßen Melamin-/Formaldehyd-Schaumstoffe enthalten 80 bis 98 Gew. %, bevorzugt 80 bis 95 Gew. %, besonders bevorzugt, 85 bis 95 Gew. %, besonders bevorzugt, 85 bis 90 Gew. % eines oder mehrerer, also 1 bis 10, bevorzugt 1 bis 5, besonders bevorzugt 1 bis 3, insbesondere 1 oder 2, ganz besonders bevorzugt 1 anorganische Füllmaterialien, wobei die Gew.-% jeweils auf das Gesamtgewicht aus zur Schaumstoffherstellung eingesetztem Melamin-/Formaldehyd-Vorkondensat und anorganischem Füllmaterial bezogen sind.

Als anorganische Füllmaterialien eignen sich Sande auf Basis von Quarz, Olivin, Basalt, Glaskugeln, Glasfasern, Keramikkugeln bestehend aus zum Beispiel Zirkonoxid, Zirkonsilikat, Wollastonit, Mica, Calciumcarbonat, Glaskeramikkugeln, Tonmineralien wie beispielsweise Kaolin, Sulfate wie Calcium- und Bariumsulfat, Carbonate wie Calciumcarbonat, und Dolomit CaMg(CO₃)₂, Kieselgur, Silikate, wie Aluminium- und Calciumsilikat, wie Wollastonit CaSiO₃, Silimanit Al₂SiO₅, Nephelin (Na,K)AiSiO₄, Andalusit Al₂[O|SiO₄], Feldspat (Ba,Ca,Na,K,NH₄)(Al,B,Si)₄O₈, Schichtsilikate, wie Montmorillonit (Smectit) (Al,Mg,Fe)₂[(OH)₂|(Si,Al)₄O₁₀] Na_{0,33}(H₂O)₄, Vermiculit Mg₂(Al,Fe,Mg)[(OH)₂|(Si,Al)₄O₁₀] · Mg_{0,35}(H₂O)₄, Allophan Al₂[SiO₅]₆O₃ · n H₂O, Kaolinit Al₄[(OH)₈|Si₄O₁₀], Halloysit Al₄[(OH)₈|Si₄O_{10]} · 2 H₂O, Mullit Al₈[(O,OH,F)|(Si,Al)O₄]₄, Talkum Mg₃Si₄O₁₀(OH)₂, wasserhaltige Sulfate Ca[SO₄] • 2 H₂O, Glimmer, wie z.B. Muskovit, kolloidale Kieselsäure oder deren Mischungen, bevorzugt granuläre Mineralien, wie Sande und Glaskugeln, bevorzugt Glaskugeln.

Die anorganischen Füllmaterialien haben einen mittleren Teilchendurchmesser (Z-Mittel mittels Lichtstreuung, Malvern, Fraunhoferbeugung) von 0,03 mm bis 3 mm, bevorzugt 0,05 mm bis 2 mm, besonders bevorzugt 0,1 bis 1 mm, insbesondere bevorzugt 0,1 bis 0,5 mm. Die anorganischen Füllmaterialien mit diesen mittleren Teilchendurchmessern liegen in Partikelform vor, und das Verhältnis der längsten Raumachse zur kürzesten Raumachse der Partikel liegt im Bereich von 4:1 bis 1:1. Bevorzugt sind sphärische, d.h. kugelförmige, Füllmaterialien.

Die anorganischen Füllmaterialien können unbeschichtet oder beschichtet eingesetzt werden. Die Menge des Beschichtungsmaterial kann in weiten Grenzen variiert werden und beträgt in der Regel 1 bis 20 Gew.-%, bevorzugt 1 bis 10 Gew.-%, besonders bevorzugt 1 bis 5 Gew.-% bezogen auf das Füllmaterial, vorteilhaft wird die Menge des Beschichtungsmaterial minimal eingestellt, um die Beschichtung zu gewährleisten.

Als Beschichtungsmaterialien eignen sich polymere Stoffe beispielsweise Melamin-Formaldehyd-Harze. Geeignete Polyurethanharze, Polyesterharze oder Epoxidharze sind dem Fachmann bekannt. Solche Harze sind beispielsweise in Encyclopedia of Polymer Science und Technology (Wiley) unter folgenden Kapiteln zu finden: a) Polyesters, unsaturated: Edition 3, Vol. 11, 2004, S. 41-64; b) Polyurethanes: Edition 3, Vol. 4. 2003, S. 26-72 und c) Epoxy resins: Edition 3, Vol. 9, 2004, S. 678-804. Des Weiteren finden sich in Ullmann's Encyclopedia of Industrial Chemistry (Wiley) folgende Kapitel: a) Polyester resins, unsaturated: Edition 6, Vol. 28, 2003, S. 65-74; b) Polyurethanes: Edition 6, Vol. 28, 2003, S. 667-722 und c) Epoxy resins: Edition 6, Vol. 12, 2003, S. 285-303. Des Weiteren können amino- oder hydroxyfunktionalisierte Polymere, insbesondere ein Polyvinylamin oder Polyvinylalkohol eingesetzt werden. Ebenso ist es möglich anorganische Beschichtungsmaterialien auf Basis von Phosphat-, Silikat- und Boratgruppen oder Kombinationen davon einzusetzen.

Die anorganischen Füllmaterialien können zur besseren Anbindung an die Schaumstruktur an ihrer Oberfläche auch chemische Funktionalisierungen aufweisen. Die chemische Funktionalisierung der Oberflächen der anorganischen Füllmaterialien ist dem Fachmann grundsätzlich bekannt und beispielsweise in WO2005/103107 beschrieben.

Bei den erfindungsgemäßen Melamin/-Formaldehyd-Schaumstoffen handelt es sich um ein offenzelliges Schaumstoffgerüst, welches eine Vielzahl miteinander verbundener, dreidimensional verzweigter Stege enthält und bei denen die anorganischen Füllstoffe in die Porenstruktur eingebettet sind. Die Partikelgröße entspricht vorzugsweise dem mittleren Porendurchmesser der Schaumstruktur (d₅₀-Wert, zahlengemittelt, bestimmt mittels Licht-oder Elektronenmikroskopie in Verbindung mit Bildauswertung), wobei dieser mittlere Porendurchmesser bevorzugt im Bereich von 10 bis 1000 µm, insbesondere im Bereich von 50 bis 500 µm liegt. Die anorganischen Füllstoffe können somit in idealer Weise in die Porenstruktur des offenzelligen Schaumstoffs eingebunden und von allen Seiten des Porengerüstes fixiert werden. Eine derartige Struktur kann durch nachträgliches Imprägnieren des Schaumstoffs mit anorganischen Füllmaterialien nicht erzeugt werden, da hierfür die Teilchengröße der anorganischen Füllstoffe immer so gewählt werden muss, dass die Teilchengröße kleiner als die Porengröße des Schaumstoffs ist, um eine Verteilung im gesamten Schaumstoff zu gewährleisten.

Die zur Herstellung der erfindungsgemäßen Melamin-Formaldehyd-Schaumstoffe eingesetzten Melamin-Formaldehyd-Vorkondensate weisen in der Regel ein Molverhältnis von Formaldehyd zu Melamin 5:1 bis 1,3:1, bevorzugt 3,5:1 bis 1,5:1 auf.

Diese Melamin/Formaldehyd-Kondensationsprodukte können neben Melamin 0 bis 50 Gew.-%, bevorzugt 0 bis 40 Gew.-%, besonders bevorzugt 0 bis 30 Gew.-%, insbesondere 0 bis 20 Gew.-% anderer Duroplastbildner und neben Formaldehyd 0 bis 50 Gew.-%, bevorzugt 0 bis 40 Gew.-%, besonders bevorzugt 0 bis 30 Gew.-%, insbesondere 0 bis 20 Gew.-% anderer Aldehyde ein kondensiert enthalten. Bevorzugt sind unmodifizierte Melamin/Formaldehyd-Vorkondensate.

Als Duroplastbildner eignen sich beispielsweise Alkyl- und Arylsubstituiertes Melamin, Harnstoff, Urethane, Carbonsäureamide, Dicyandiamid, Guanidin, Sulfurylamid, Sulfonsäureamide, aliphatische Amine, Glykole, Phenol oder deren Derivate.

Als Aldehyde eignen sich beispielsweise Acetaldehyd, Trimethylolacetaldehyd, Acrolein, Benzaldehyd, Furfural, Glyoxal, Glutaraldehyd, Phthalaldehyd, Terephthalaldehyd oder deren Gemische. Weitere Einzelheiten über Melamin/Formaldehyd-Kondensationsprodukte finden sich in Houben-Weyl, Methoden der organischen Chemie, Band 14/2, 1963, Seiten 319 bis 402.

Die erfindungsgemäßen Melamin-/Formaldehyd-Schaumstoffe lassen sich wie folgt herstellen:
Melamin-Formaldehyd-Vorkondensat und ein Lösungsmittel können mit einer Säure, einem Dispergiermittel, einem Treibmittel und anorganischem Füllmaterial bei Temperaturen oberhalb der Siedetemperatur des Treibmittels verschäumt und anschließend getrocknet werden.

In einer besonderen Ausführungsform werden anorganische Füllmaterialien nach dem Fachmann bekannten Methoden beschichtet. Dies kann beispielsweise mittels einer Sprühvorrichtung in einer Mischvorrichtung (z.B. Intensivmischer der Fa. Eirich) erfolgen. Somit wird eine homogene Benetzung der Füllmaterialien erzielt. In einer besonderen Ausführungsform lässt man das Beschichtungsmaterial nicht vollständig aushärten, um die Anbindung im Schaumstoff zu erhöhen.

Als Melamin-/Formaldehyd-Vorkondensate eignen sich eigens hergestellte (siehe Übersichtsschriften: a) W. Woebcken, Kunststoffhandbuch 10. Duroplaste, München, Wien 1988, b) Encyclopedia of Polymer Science and Technology, 3. Aufl., Vol.1, Kap. Amino Resins, S. 340 bis 370, 2003 c) Ullmann's Encyclopedia of Industrial Chemistry, 6. Aufl., Vol. 2, Kap. Amino Resins, S. 537 bis 565. Weinheim 2003) oder handelsübliche Vorkondensate der beiden Komponenten, Melamin und Formaldehyd. Die Melamin-Formaldehyd-Vorkondensate weisen in der Regel ein Molverhältnis von Formaldehyd zu Melamin 5 : 1 bis 1,3 : 1, bevorzugt 3,5 : 1 bis 1,5 : 1 auf.

Eine bevorzugte Verfahrensvariante zur Herstellung des erfindungsgemäßen Schaumstoffes umfasst die Stufen:
(1) Herstellen einer Suspension enthaltend ein Melamin/Formladehyd-Vorkondensat des herzustellenden Schaumstoffs, anorganische Füllstoffe und gegebenenfalls weitere Zusatzkomponenten,
(2) Aufschäumen des Vorkondensates durch Erhitzen der Suspension aus Schritt (1) auf eine Temperatur oberhalb der Siedetemperatur des Treibmittels,
(3) Trocknen des aus Schritt (2) erhaltenen Schaumstoffs.

Die einzelnen Verfahrensschritte und die verschiedenen Variationsmöglichkeiten werden nachfolgend näher ausgeführt.

Es können bei der Herstellung des Melamin-/Formaldehyd-Vorkondensates Alkohole, beispielsweise Methanol, Ethanol oder Butanol zugesetzt werden, um teilweise oder vollständig veretherte Kondensate zu erhalten. Durch die Bildung der Ethergruppen können die Löslichkeit des Melamin-/Formaldehyd-Vorkondensates und die mechanischen Eigenschaften des vollständig ausgehärteten Materials beeinflusst werden.

Als Dispergiermittel bzw. Emulgator können anionische, kationische und nicht ionische Tenside sowie Mischungen davon eingesetzt werden.

Geeignete anionische Tenside sind beispielsweise Diphenylenoxidsulfonate, Alkan- und Alkylbenzolsulfonate, Alkylnaphthalinsulfonate, Olefinsulfonate, Alkylethersulfonate, Fettalkohol-sulfate, Ethersulfate, α-Sulfofettsäureester, Acylaminoalkansulfonate, Acylisothionate, Alkylethercarboxylate, N-Acylsarcosinate, Alkyl- und Alkyletherphosphate. Als nicht ionische Tenside können Alkylphenolpolyglykolether, Fettalkoholpolyglykolether, Fettsäurepolyglykol-ether, Fettsäurealkanolamide, Ethylenoxid/- Propylenoxid-Blockcopolymere, Aminoxide, Glycerin-fettsäureester, Sorbitanester und Alkylpolyglykoside verwendet werden. Als kationische Emulgatoren können z.B. Alkyltriammoniumsalze, Alkylbenzyldimethylammoniumsalze und Alkylpyridiniumsalze eingesetzt werden.

Die Dispergiermittel bzw. Emulgatoren können in Mengen von 0,2 bis 5 Gew.-%, bezogen auf das Melamin-/Formaldehyd-Vorkondensat eingesetzt werden.

Die Dispergiermittel bzw. Emulgatoren und/oder Schutzkolloide können im Prinzip zu einem beliebigen Zeitpunkt zur Rohdispersion gegeben werden, sie können jedoch auch bereits in dem Lösungsmittel bei Einbringung der Mikrokapsel-Dispersion vorhanden sein.

Prinzipiell können bei dem erfindungsgemäßen Verfahren sowohl physikalische als auch chemische Treibmittel verwendet werden.

Abhängig von der Wahl des Melamin-/Formaldehyd-Vorkondensates enthält die Mischung ein Treibmittel. Dabei richtet sich die Menge des Treibmittels in der Mischung in der Regel nach der erwünschten Dichte des Schaumstoffs.

Als Treibmittel eignen sich "physikalische" oder "chemische" Treibmittel (Encyclopedia of Polymer Science and Technology, Vol. I, 3. Aufl., Kapitel Additives, Seite 203 bis 218,2003).

Als "physikalische" Treibmittel eignen sich, beispielsweise Kohlenwasserstoffe, wie Pentan, Hexan, halogenierte, insbesondere chlorierte und/oder fluorierte Kohlenwasserstoffe, beispielsweise Methylenchlorid, Chloroform, Trichlorethan, Fluorchlorkohlenwasserstoffe, teilhalogenierte Fluorchlorkohlenwasserstoffe (H-FCKW), Alkohole, beispielsweise Methanol, Ethanol, n- oder iso-Propanol, Ether, Ketone und Ester, beispielsweise Ameisensäuremethylester, Ameisensäureethylester, Essigsäuremethylester oder Essigsäureethylester, in flüssiger Form oder Luft, Stickstoff und Kohlendioxid als Gase.

Als "chemische" Treibmittel eignen sich, beispielsweise Isocyanate im Gemisch mit Wasser, wobei als wirksames Treibmittel Kohlendioxid freigesetzt wird. Ferner sind Carbonate und Bicarbonate im Gemisch mit Säuren geeignet, welche ebenfalls Kohlendioxid erzeugen. Auch geeignet sind Azoverbindungen, wie z.B. Azodicarbonamid.

In einer bevorzugten Ausführungsform der Erfindung enthält die Mischung zusätzlich wenigstens ein Treibmittel. Dieses Treibmittel liegt in der Mischung in einer Menge von 0,5 bis 60 Gew.-%, bevorzugt 1 bis 40 Gew.-%, besonders bevorzugt 1,5 bis 30 Gew.-% bezogen auf das Melamin-/Formaldehyd-Vorkondensat, vor. Es wird bevorzugt ein physikalisches Treibmittel mit einem Siedepunkt zwischen 0 und 80°C zugesetzt.

Als Härter können saure (acide) Verbindungen eingesetzt werden, die die Weiterkondensation des Melaminharzes katalysieren. Die Menge dieser Härter beträgt in der Regel 0,01 bis 20 Gew.-%, bevorzugt 0,05 und 5 Gew.-%, jeweils bezogen auf das Vorkondensat. Geeignete saure Verbindungen sind anorganische und organische Säuren, zum Beispiel ausgewählt aus der Gruppe bestehend aus Salzsäure, Schwefelsäure, Phosphorsäure, Salpetersäure, Ameisensäure, Essigsäure, Oxalsäure, Toluolsulfonsäuren, Amidosulfonsäuren, Säureanhydride und Mischungen davon.

In einer weiteren Ausführungsform enthält die Mischung neben dem Melamin-/Formaldehyd-Vorkondensat des herzustellenden Schaumstoffes und den anorganischen Füllmaterialien, auch einen Emulgator sowie gegebenenfalls einen Härter und gegebenenfalls ein Treibmittel.

In einer weiteren Ausführungsform ist die Mischung frei von weiteren Zusatzstoffen. Für manche Zwecke kann es jedoch günstig sein, 0,1 bis 20 Gew.-%, bevorzugt 0,1 bis 10 Gew.%, bezogen auf das Melamin-/Formaldehyd-Vorkondensat, an üblichen, von den anorganischen Füllmaterialien verschiedenen Zusatzstoffen, wie Farbstoffe, Flammschutzmittel, UV-Stabilisatoren, Mittel zur Herabsetzung der Brandgastoxizität oder zur Förderung der Verkohlung, Duftstoffe, optische Aufheller oder Pigmente zuzusetzen. Diese Zusatzstoffe sind bevorzugt homogen in dem Schaumstoff verteilt.

Als Pigmente können beispielsweise die gängigen organischen Pigmente eingesetzt werden. Diese Pigmente können zuvor mit dem anorganischen Füllstoff vermengt werden.

Für einen guten Brandschutz sollte der Anteil an weiteren organischen Bestandteilen neben dem Melamin-Formaldehyd-Harz in dem Schaumstoff möglichst gering sein. Bevorzugt sind Schaumstoffe, bei denen der Anteil an weiteren organischen Bestandteilen so gering ist, dass sie den Brandtest A2 nach DIN EN 13501-1 bestehen.

Im nachfolgenden Schritt des erfindungsgemäßen Verfahrens erfolgt das Aufschäumen des Vorkondensates in der Regel durch Erhitzen der Suspension des Melamin-/Formaldehyd-Vorkondensates und der anorganischen Füllmaterialien, um einen Schaumstoff zu erhalten, der anorganischen Füllmaterialien enthält. Dazu wird die Suspension in der Regel auf eine Temperatur oberhalb des Siedepunktes des verwendeten Treibmittels erwärmt und in einer geschlossenen Form verschäumt.

Bevorzugt kann der Energieeintrag durch elektromagnetische Strahlung erfolgen, beispielsweise durch Hochfrequenzbestrahlung mit 5 bis 400 kW, bevorzugt 5 bis 200 kW, besonders bevorzugt 9 bis 120 kW pro Kilogramm der eingesetzten Mischung in einem Frequenzbereich von 0,2 bis 100 GHz, bevorzugt 0,5 bis 10 GHz. Als Strahlungsquelle für dielektrische Strahlung sind Magnetrone geeignet, wobei mit einem oder mehreren Magnetronen gleichzeitig bestrahlt werden kann.

Die hergestellten Schaumstoffe werden abschließend getrocknet, wobei im Schaumstoff verbliebenes Wasser und Treibmittel entfernt wird.

Eine Nachbehandlung kann auch zur Hydrophobierung des Schaumstoffs eingesetzt werden. Bevorzugt werden hierbei hydrophobe Beschichtungsmittel eingesetzt, die eine hohe Temperaturstabilität und eine geringe Brennbarkeit aufweisen, beispielsweise Silikone, Silikonate oder fluorierte Verbindungen.

Bei dem beschriebenen Verfahren entstehen Schaumstoffblöcke bzw. -platten, die zu beliebigen Formen zurechtgeschnitten werden können.

Die Schaumstoffblöcke bzw. -platten können optional in einem weiteren Verfahrensschritt thermokomprimiert werden. Die Thermokomprimierung als solche ist dem Fachmann bekannt und beispielsweise in WO 2007/031944, EP-A 451 535, EP-A 111 860 und US-B 6,608,118 beschrieben. Durch die Thermokomprimierung kann oftmals eine bessere Fixierung der anorganischen Füllmaterialien an die offenzellige Schaumstruktur erreicht werden.

Die Dichte des Schaumstoffs beträgt in der Regel 3 bis 100 kg/m³, bevorzugt 10 bis 100 kg/m³, besonders bevorzugt 15 bis 85 kg/m³, besonders bevorzugt 40 bis 75 kg/m³.

Der nach dem erfindungsgemäßen Verfahren erhältliche Schaumstoff hat bevorzugt eine offenzellige Struktur mit einer Offenzelligkeit, gemessen nach DIN ISO 4590, von mehr als 50 %, insbesondere mehr als 80 %.

Der mittlere Porendurchmesser liegt bevorzugt im Bereich von 10 bis 1.000 µm, insbesondere im Bereich von 50 bis 500 µm (d₅₀-Wert, zahlengemittelt, bestimmt mittels Licht-oder Elektronenmikroskopie in Verbindung mit Bildauswertung).

Der erfindungsgemäße Schaumstoff ist bevorzugt elastisch. Die Melamin-/Formaldehyd-Schaumstoffe mit hohen anorganischen Anteilen von 80 bis 98 Gew. % erfüllen in der Regel den Brandtest A2 gemäß DIN EN ISO 13501-1.

Der nach dem erfindungsgemäßen Verfahren erhältliche Schaumstoff kann auf vielfältige Weise zur Wärme- und Schalldämmung im Bauwesen und im Automobil-, Schiffs- und Schienenfahrzeugbau, dem Bau von Raumfahrzeugen oder in der Polsterindustrie eingesetzt werden, beispielsweise zur Wärmedämmung im Hausbau oder als schalldämmendes Material, z. B. in Automobilen, Flugzeugen, Bahnen, Schiffen, etc. in Fahrtgastzellen oder im Motorraum oder zur Bepolsterung von Sitz- und Liegeflächen sowie für Rücken- und Armlehnen. Vorzugsweise liegen Anwendungsfelder in Bereichen, die eine hohe Temperaturstabilität und geringe Entflammbarkeit voraussetzen, z.B. in Porenbrennern. Geeignet ist das Material auch zur Isolierung im Umfeld starker Strahlung, die organische Materialien langfristig zersetzt, beispielsweise in Atomkraftwerken. Ferner kann das Material auch als "Schwamm", in der Reinigungsindustrie für in der Reinigung von Flächen z.B. in Form von Schwämmen oder getränkt mit Reinigungsmitteln aller Art eingesetzt werden.
Für bestimmte Anwendungsbereiche kann es vorteilhaft sein, die Oberfläche der erfindungsgemäßen Schaumstoffe mit einer dem Fachmann grundsätzlich bekannten Kaschierung oder Laminierung zu versehen. Solche Kaschierungen oder Laminierungen können beispielsweise unter weitgehender Erhaltung der akustischen Eigenschaften mit sogenannten "offenen" Systemen, wie beispielweise Lochplatten erfolgen, oder aber auch mit "geschlossenen" Systemen, beispielsweise Folien oder Platten aus Kunststoff, Metall oder Holz.

Die erfindungsgemäßen Melaminharzschaumstoffe weisen eine verbesserte Kombination aus Brandeigenschaften und mechanischen Eigenschaften auf.

### Beispiele:

Verwendete Normen und Meßverfahren:
DIN EN 13501-1 - Klassifizierung von Bauprodukten und Bauarten zu ihrem Brandverhalten:
Diese Europäische Norm legt die Verfahren zur Klassifizierung des Brandverhaltens von Bauprodukten einschließlich der Produkte innerhalb von Bauteilen fest.
Ein Bauprodukt, das für die Klasse A2 vorgesehen ist, muss entweder nach EN ISO 1182 oder EN ISO 1716 geprüft werden. Zusätzlich müssen alle Bauprodukte, die für die Klasse A2 vorgesehen sind, nach EN 13823 geprüft werden.

EN ISO 1716 - Prüfverfahren zur Verbrennungswärme:
Dieses Prüfverfahren bestimmt die potentielle maximale Wärmefreisetzung eines Bauprodukts bei vollständiger Verbrennung, ohne Berücksichtigung seiner praktischen Anwendung. Das Prüfverfahren ist relevant für die Klassen A1 und A2. Das Prüfverfahren ermöglicht sowohl die Bestimmung des Brennwertes als auch die Bestimmung des Heizwertes.

EN ISO 1182 - Nichtbrennbarkeitsprüfung:
Diese Prüfung stellt fest, welche Bauprodukte keinen oder keinen bedeutenden Beitrag zu einem Brand leisten, ohne Berücksichtigung ihrer praktischen Anwendung. Das Prüfverfahren ist relevant für die Klassen A1 und A2.

EN 13823 - Prüfverfahren zum SBI (Single Burning Item):
Dieses Prüfverfahren bewertet den potentiellen Beitrag eines Bauprodukts zu einem sich entwickelnden Brand bei einer Brandsituation, die einen einzeln brennenden Gegenstand (Single Burning Item, SBI) in einer Raumecke nahe an diesem Bauprodukt simuliert. Das Prüfverfahren ist relevant für die Klassen A2, B, C und D.

Die Brandklasse A2 in den nachfolgenden (Vergleichs-)Beispielen wurde gemäß EN ISO 1716 und EN 13823 bestimmt.

Mechanischen Eigenschaften, Elastizität:
Alle Stempeldruckmessungen zur Beurteilung der mechanischen Güte der Melaminharzschaumstoffe erfolgten nach US-A-4 666 948. Dazu wurde ein zylindrischer Stempel mit einem Durchmesser von 8 mm und einer Höhe von 10 cm in eine zylindrische Probe mit dem Durchmesser von 11 cm und einer Höhe von 5 cm in Schäumrichtung bei einem Winkel von 90° gedrückt bis die Probe reißt. Die Durchreißkraft [N], im folgenden auch Stempeldruckwert genannt, gibt Auskunft über die Güte des Schaumstoffs.

### Vergleichsbeispiel A

Herstellung eines Melamin-/Formaldehyd-Schaumstoffes ohne Füllmaterialien (nach WO-A-2009/021963):
75 Gew.-Teile eines sprühgetrockneten Melamin-/Formaldehyd-Vorkondensates (Molverhältnis 1:3) wurden in 25 Gew.-Teilen Wasser gelöst, 3 Gew.-% Ameisensäure, 2 Gew.-% eines Na-C₁₂/C₁₄-Alkysulfats, 38 Gew.-% Pentan, wobei die Gew.-% jeweils bezogen sind auf das Vorkondensat, zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Der Melamin-/Formaldehyd-Schaumstoff hat eine Dichte von 3,5 g/l und einen Stempeldruckwert von 10,4 N. Der Schaumstoff erfüllt die Anforderungen an die Brandklasse A2 nach DIN EN 13501-1 nicht.

### Vergleichsbeispiel B

Herstellung eines Melamin-/Formaldehyd-Schaumstoffes mit 75 Gew.-%, bezogen auf das Gesamtgewicht aus zur Schaumstoffherstellung eingesetztem Melamin-/Formaldehyd-Vorkondensat und anorganischem Füllmaterial, Glaskugeln als Füllmaterial:
75 Gew.-Teile eines sprühgetrockneten Melamin-/Formaldehyd-Vorkondensates (Molverhältnis 1:3) wurden in 25 Gew.-Teilen Wasser gelöst, 3 Gew.-% Ameisensäure, 2 Gew.-% eines Na-C₁₂/C₁₄-Alkylsulfats, 38 Gew.-% Pentan, wobei die Gew.-% jeweils bezogen sind auf das Vorkondensat, und 225 Gew.-Teile Glasperlen Type Microbeads (Teilchengrößenverteilung ("TGV") im Bereich von 0,2 bis 0,3 mm, mittlerer Teilchendurchmesser 0,25 mm, Sigmund Lindner GmbH) zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Der Melamin-/Formaldehyd-Schaumstoff hat eine Dichte von 18 g/l und einen Stempeldruckwert von 23,7 N. Der Schaumstoff erfüllt die Anforderungen an die Brandklasse A2 nach DIN EN 13501-1 nicht.

### Vergleichsbeispiel C

Herstellung eines Melamin-/Formaldehyd-Schaumstoffes mit 77,5 Gew.-%, bezogen auf das Gesamtgewicht aus zur Schaumstoffherstellung eingesetztem Melamin-/Formaldehyd-Vorkondensat und anorganischem Füllmaterial, Glaskugeln als Füllmaterial:
Die Durchführung des Beispiels erfolgte analog Vergleichsbeispiel B, jedoch wurden 258 Gew.-Teile Glasperlen Type Microbeads (TGV im Bereich von 0,2 bis 0,3 mm, mittlerer Teilchendurchmesser 0,25 mm, Sigmund Lindner GmbH) eingesetzt.

Der Melamin-/Formaldehyd-Schaumstoff hat eine Dichte von 21 g/l. Der Schaumstoff erfüllt die Anforderungen an die Brandklasse A2 nach DIN EN 13501-1 nicht.

### Vergleichsbeispiel D

Herstellung eines Melamin-/Formaldehyd-Schaumstoffes mit 90 Gew.-%, bezogen auf das Gesamtgewicht aus zur Schaumstoffherstellung eingesetztem Melamin-/Formaldehyd-Vorkondensat und anorganischem Füllmaterial, Glaskugeln als Füllmaterial:
Die Durchführung des Beispiels erfolgte analog Vergleichsbeispiel B, jedoch wurden 675 Gew.-Teile Glasperlen Type Microbeads (TGV im Bereich von 0 bis 0,02 mm, mittlerer Teilchendurchmesser 0,01 mm, Sigmund Lindner GmbH) eingesetzt.

Es wurde kein flexibler Schaumstoff erhalten.

### Beispiel 1

Herstellung eines Melamin-/Formaldehyd-Schaumstoffes mit 80 Gew.-%, bezogen auf das Gesamtgewicht aus zur Schaumstoffherstellung eingesetztem Melamin-/Formaldehyd-Vorkondensat und anorganischem Füllmaterial, Glasperlen als Füllmaterial:
75 Gew.-Teile eines sprühgetrockneten Melamin-/Formaldehyd-Vorkondensates (Molverhältnis 1:3) wurden in 25 Gew.-Teilen Wasser gelöst, 3 Gew.-% Ameisensäure, 2 Gew.-% eines Na-C₁₂/C₁₄-Alkylsulfats, 38 Gew.-% Pentan, wobei die Gew.-% jeweils bezogen sind auf das Vorkondensat, und 300 Gew.-Teile Glasperlen Type Microbeads (TGV im Bereich von 0,2 bis 0,3 mm, mittlerer Teilchendurchmesser 0,25 mm, Sigmund Lindner GmbH) zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Der Schaumstoff hat eine Dichte von 27 g/l, einen Stempeldruckwert von 22,5 N und erfüllte die Anforderungen an die Brandklasse A2 nach DIN EN 13501-1.

### Beispiel 2

Herstellung eines Melamin-/Formaldehyd-Schaumstoffes mit 90 Gew.-%, bezogen auf das Gesamtgewicht aus zur Schaumstoffherstellung eingesetztem Melamin-/Formaldehyd-Vorkondensat und anorganischem Füllmaterial, Glasperlen als Füllmaterial:
Die Durchführung des Beispiels erfolgte analog Beispiel 1, jedoch wurden 675 Gew.-Glasperlen Type Microbeads (TGV im Bereich von 0,2 bis 0,3 mm, mittlerer Teilchendurchmesser 0,25 mm, Sigmund Lindner GmbH) eingesetzt.

Der Schaumstoff hat eine Dichte von 51 g/l, einen Stempeldruck von 13,5 N und erfüllt die Anforderungen an die Brandklasse A2 nach DIN EN 13501-1.

### Beispiel 3

Herstellung eines Melamin-/Formaldehyd-Schaumstoffes mit 90 Gew.-%, bezogen auf das Gesamtgewicht aus zur Schaumstoffherstellung eingesetztem Melamin-/Formaldehyd-Vorkondensat und anorganischem Füllmaterial, Glasperlen als Füllmaterial:
Die Durchführung des Beispiels erfolgte analog Beispiel 1, jedoch wurden 675 Gew.-Glasperlen Type Microbeads (TGV im Bereich von 0,04 bis 0,07 mm, mittlerer Teilchendurchmesser 0,06 mm, Sigmund Lindner GmbH) eingesetzt.

Der Schaumstoff hat eine Dichte von 51 g/l, einen Stempeldruck von 5,8 N und erfüllt die Anforderungen an die Brandklasse A2 nach DIN EN 13501-1.

### Beispiel 4

Herstellung eines Melamin-/Formaldehyd-Schaumstoffes mit 90 Gew.-%, bezogen auf das Gesamtgewicht aus zur Schaumstoffherstellung eingesetztem Melamin-/Formaldehyd-Vorkondensat und anorganischem Füllmaterial, Glasperlen als Füllmaterial:
Die Durchführung des Beispiels erfolgte analog Beispiel 1, jedoch wurden 675 Gew.-Glasperlen Type Microbeads (TGV im Bereich von 0,07 bis 0,11 mm, mittlerer Teilchendurchmesser 0,09 mm, Sigmund Lindner GmbH) eingesetzt.

Der Schaumstoff hat eine Dichte von 51 g/l, einen Stempeldruck von 7,8 N und erfüllt die Anforderungen an die Brandklasse A2 nach DIN EN 13501-1.

### Beispiel 5

Herstellung eines Melamin-/Formaldehyd-Schaumstoffes mit 90 Gew.-%, bezogen auf das Gesamtgewicht aus zur Schaumstoffherstellung eingesetztem Melamin-/Formaldehyd-Vorkondensat und anorganischem Füllmaterial, Quarzsand als Füllmaterial:
Die Durchführung des Beispiels erfolgte analog Beispiel 1, jedoch wurden 675 Gew.-Teile Quarzsand (TGV im Bereich von 0,3 bis 0,7 mm, mittlerer Teilchendurchmesser 0,5 mm) eingesetzt.

Der Schaumstoff hat eine Dichte von 51 g/l, einen Stempeldruck von 3,7 N und erfüllt die Anforderungen an die Brandklasse A2 nach DIN EN 13501-1.

### Beispiel 6

Herstellung eines Melamin-/Formaldehyd-Schaumstoffes mit 90 Gew.-%, bezogen auf das Gesamtgewicht aus zur Schaumstoffherstellung eingesetztem Melamin-/Formaldehyd-Vorkondensat und anorganischem Füllmaterial, Olivin als Füllmaterial:
Die Durchführung des Beispiels erfolgte analog Beispiel 1, jedoch wurden 675 Gew.-Teile Olivin (TGV im Bereich von 0,25 bis 0,5 mm, mittlerer Teilchendurchmesser 0,4 mm, Vanguard 250-500, Sibelco) eingesetzt.

Der Schaumstoff hatte eine Dichte von 51 g/l, einen Stempeldruck von 1,6 N und erfüllte die Anforderungen an die Brandklasse A2 nach DIN EN 13501-1.

### Beispiel 7

Herstellung eines Melamin-/Formaldehyd-Schaumstoffes mit 95 Gew.-%, bezogen auf das Gesamtgewicht aus zur Schaumstoffherstellung eingesetztem Melamin-/Formaldehyd-Vorkondensat und anorganischem Füllmaterial, Carbolite als Füllmaterial:
Die Durchführung des Beispiels erfolgte analog Beispiel 1, jedoch wurden 1425 Gew.-Teile Carbolite 20/40 (TGV im Bereich von 0,6 bis 0,85 mm, mittlerer Teilchendurchmesser 0,7 mm, Carboceramics) eingesetzt.

Der Schaumstoff hatte eine Dichte von 87 g/l, einen Stempeldruck von 6,9 N und erfüllte die Anforderungen an die Brandklasse A2 nach DIN EN 13501-1.

### Beispiel 8

Herstellung eines Melamin-/Formaldehyd-Schaumstoffes mit 90 Gew.-%, bezogen auf das Gesamtgewicht aus zur Schaumstoffherstellung eingesetztem Melamin-/Formaldehyd-Vorkondensat und anorganischem Füllmaterial, Mullit als Füllmaterial:
Die Durchführung des Beispiels erfolgte analog Beispiel 1, jedoch wurden 675 Gew.-Teile Mullit (M72, TGV im Bereich von 0 bis 0,5 mm, mittlerer Teilchendurchmesser 0,25 mm, Nabaltec) eingesetzt.

Der Schaumstoff hatte eine Dichte von 63 g/l, einen Stempeldruck von 4,6 N und erfüllte die Anforderungen an die Brandklasse A2 nach DIN EN 13501-1.

## Patentansprüche

1. Melamin-/Formaldehyd-Schaumstoffe, enthaltend 80 bis 98 Gew.-% eines anorganischen Füllmaterials, wobei die Gew.-% auf das Gesamtgewicht aus zur Schaumstoffherstellung eingesetztem Melamin-/Formaldehyd-Vorkondensat und anorganischem Füllmaterial bezogen sind, **dadurch gekennzeichnet, dass** die anorganischen Füllmaterialien mittlere Teilchendurchmesser von 0,03 mm bis 3 mm haben und in Partikelform vorliegen, wobei das Verhältnis der längsten Raumachse zur kürzesten Raumachse der Partikel im Bereich von 4:1 bis 1:1 liegt.

2. Melamin-/Formaldehyd-Schaumstoffe nach Anspruch 1, **dadurch gekennzeichnet, dass** diese 80 bis 95 Gew.-% eines anorganischen Füllmaterials enthalten, wobei die Gew.-% auf das Gesamtgewicht aus zur Schaumstoffherstellung eingesetztem Melamin-/Formaldehyd-Vorkondensat und anorganischem Füllmaterial bezogen sind.

3. Melamin-/Formaldehyd-Schaumstoffe nach Anspruch 1 oder 2, **dadurch gekennzeichnet, dass** als anorganisches Füllmaterial Quarz, Olivin, Basalt, Glaskugeln, Glasfasern, Keramikkugeln, Tonmineralien, Sulfate, Carbonate, Kieselgur, Silikate, kolloidale Kieselsäure oder deren Mischungen eingesetzt werden.

4. Melamin-/Formaldehyd-Schaumstoffe nach einem der Ansprüche 1 bis 3, **dadurch gekennzeichnet, dass** die anorganischen Füllmaterialien kugelförmige Partikel sind.

5. Melamin-/Formaldehyd-Schaumstoffe nach einem der Ansprüche 1 bis 4, **dadurch gekennzeichnet, dass** die anorganischen Füllmaterialien in die Porenstruktur des Schaumstoffs eingebettet sind und der mittlere Teilchendurchmesser dem mittleren Porendurchmesser der Schaumstruktur entspricht.

6. Melamin-/Formaldehyd-Schaumstoffe nach einem der Ansprüche 1 bis 5, **dadurch gekennzeichnet, dass** die Dichte des Melamin-/Formaldehyd-Schaumstoffs weniger als 100 g/i beträgt.

7. Verfahren zur Herstellung der Melamin-/Formaldehyd-Schaumstoffe nach einem der Ansprüche 1 bis 6, **dadurch gekennzeichnet, dass** man Melamin-Formaldehyd-Vorkondensate in einem Lösungsmittel mit einer Säure, einem Dispergiermittel, einem Treibmittel und anorganischem Füllmaterial bei Temperaturen oberhalb der Siedetemperatur des Treibmittels verschäumt und anschließend trocknet.

8. Verwendung der Melamin-/Formaldehyd-Schaumstoffe nach Anspruch 1 bis 6 zur Wärme- und Schalldämmung im Bauwesen, im Automobil-, Schiffs- und Schienenfahrzeugbau, dem Bau von Raumfahrzeugen oder in der Polsterindustrie.

## Claims

1. A melamine-formaldehyde foam comprising from 80% to 98% by weight of an inorganic filling material, wherein the % by weight are based on the total weight of inorganic filling material plus melamine-formaldehyde precondensate used for foam production, wherein the inorganic filling materials have average particle diameters in the range from 0.03 mm to 3 mm and are present in particle form, wherein the ratio of the longest axis to the shortest axis of the particles is in the range from 4:1 to 1:1.

2. The melamine-formaldehyde foam according to claim 1 comprising from 80% to 95% by weight of an inorganic filling material, wherein the % by weight are based on the total weight of inorganic filling material plus melamine-formaldehyde precondensate used for foam production.

3. The melamine-formaldehyde foam according to claim 1 or 2 wherein the inorganic filling material used comprises quartz, olivine, basalt, glass spheres, glass fibers, ceramic spheres, clay minerals, sulfates, carbonates, kieselguhr, silicates, colloidal silica or mixtures thereof.

4. The melamine-formaldehyde foam according to any one of claims 1 to 3 wherein the inorganic filling materials are spherical particles.

5. The melamine-formaldehyde foam according to any one of claims 1 to 4 wherein the inorganic filling materials are embedded into the pore structure of the foam and the average particle diameter corresponds to the average pore diameter of the foam structure.

6. The melamine-formaldehyde foam according to any one of claims 1 to 5 wherein the density of the melamine-formaldehyde foam is less than 100 g/l.

7. A process for producing the melamine-formaldehyde foam according to any one of claims 1 to 6, which comprises a melamine-formaldehyde precondensate being foamed in a solvent with an acid, a dispersant, a blowing agent and inorganic filling material at temperatures above the boiling temperature of the blowing agent and subsequently dried.

8. The use of the melamine-formaldehyde foam according to claims 1 to 6 for thermal and acoustic insulation in building construction, automobile, ship and track vehicle construction, the construction of spacecraft or in the upholstery industry.

## Revendications

1. Mousses mélamine/formaldéhyde, contenant 80 à 98 % en poids d'une matière de charge inorganique, les pourcentages en poids étant par rapport au poids total du produit de précondensation mélamine/formaldéhyde, utilisé pour la production de la mousse, et de la matière de charge inorganique, **caractérisées en ce que** les matières de charge inorganiques ont des diamètres moyens de particule de 0,03 mm à 3 mm et se trouvent sous forme de particules, le rapport de l'axe spatial le plus long à l'axe spatial le plus court des particules se situant dans la plage de 4:1 à 1:1.

2. Mousses mélamine/formaldéhyde selon la revendication 1, **caractérisées en ce que** celles-ci contiennent 80 à 95 % en poids d'une matière de charge inorganique, les pourcentages en poids étant par rapport au poids total du produit de précondensation mélamine/formaldéhyde, utilisé pour la production de la mousse, et de la matière de charge inorganique.

3. Mousses mélamine/formaldéhyde selon la revendication 1 ou 2, **caractérisées en ce qu'**on utilise comme matière de charge inorganique du quartz, de l'olivine, du basalte, des billes de verre, des fibres de verre, des billes de céramique, des minéraux argileux, des sulfates, des carbonates, du kieselguhr, des silicates, de la silice colloïdale ou des mélanges de ceux-ci.

4. Mousses mélamine/formaldéhyde selon l'une quelconque des revendications 1 à 3, **caractérisées en ce que** les matières de charges inorganiques sont des particules sphériques.

5. Mousses mélamine/formaldéhyde selon l'une quelconque des revendications 1 à 4, **caractérisées en ce que** les matières de charge inorganiques sont noyées dans la structure poreuse de la mousse et le diamètre moyen des particules correspond au diamètre moyen des pores de la structure alvéolaire.

6. Mousses mélamine/formaldéhyde selon l'une quelconque des revendications 1 à 5, **caractérisées en ce que** la densité de la mousse mélamine/formaldéhyde est inférieure à 100 g/l.

7. Procédé pour la production des mousses mélamine/formaldéhyde selon l'une quelconque des revendications 1 à 6, **caractérisé en ce qu'**on transforme en mousse des produits de précondensation mélamine-formaldéhyde dans un solvant avec un acide, un dispersant, un agent porogène et une matière de charge inorganique, à des températures supérieures à la température d'ébullition de l'agent porogène, et ensuite on les sèche.

8. Utilisation des mousses mélamine/formaldéhyde selon l'une quelconque des revendications 1 à 6, pour l'isolation thermique et phonique dans le bâtiment, la construction d'automobiles, de bateaux et de véhicules sur rail, la constriction d'engins spatiaux ou dans l'industrie de l'ameublement.
